# EUROPÄISCHE PATENTSCHRIFT

(11) **EP 1 537 903 B1**
(45) Veröffentlichungstag und Bekanntmachung des Hinweises auf die Patenterteilung: **09.02.2011**
(21) Anmeldenummer: 04024719.9
(22) Anmeldetag: 16.10.2004
(51) Int. Cl.: B01D 46/12, B01D 46/52

(54) **Vorrichtung mit Filter**
Apparatus with filter
Dispositif avec filtre

(30) Priorität: 06.12.2003 DE 10357076
(43) Veröffentlichungstag der Anmeldung: 08.06.2005
(73) Patentinhaber: Weinmann Geräte für Medizin GmbH & Co. KG, 22525 Hamburg (DE)
(72) Erfinder: Göbel, Christof, 22529 Hamburg (DE)
(74) Vertreter: Klickow, Hans-Henning

(56) Entgegenhaltungen:
- GB-A- 1 302 878
- US-A- 2 979 159
- PATENT ABSTRACTS OF JAPAN Bd. 2000, Nr. 04, 31. August 2000 (2000-08-31) & JP 2000 015029 A (SANYO ELECTRIC CO LTD), 18. Januar 2000 (2000-01-18)

## Beschreibung

Die Erfindung betrifft eine Vorrichtung mit einem Filter, der aus einem Grobfilter und einem Feinfilter ausgebildet ist und bei dem der Grobfilter in einer Grobfilterhalterung und der Feinfilter in einer Feinfilterhalterung angeordnet sind, und bei der sowohl die Grobfilterhalterung als auch die Feinfilterhalterung in einem Gerätegehäuse gehaltert und relativ zu diesem positionierbar angeordnet sind sowie bei der die Feinfilterhalterung mindestens einen Teil einer Arretierung der Grobfilterhalterung ausbildet.

Derartige Filtereinrichtungen werden typischerweise bei pneumatischen Einrichtungen verwendet, um ein Ansaugen von Partikeln zu verhindern. Häufig sind in Strömungsrichtung hinter der Filtereinrichtung Gebläse, Ventilatoren oder Kompressoren angeordnet. In Strömungsrichtung ist typischerweise vor dem Feinfilter der Grobfilter angeordnet, um gröbere verunreinigungen zurückzufalten. Der Feinfilter dient zum Zurückhalten feinerer verunreinigungen und wird durch den vorgeschalteten Grobfilter vor den groben Verunreinigungen geschützt. Durch diese gestaffelte Filterung kann eine lange Betriebsfähigkeit bei zugleich guter Filterwirkung erzielt werden.

Bei einer Verwendung derartiger zweistufiger Filtereinrichtungen hat es sich gezeigt, daß aufgrund von Bedienungsfehlern oder zur Erreichung einer Materialeinsparung häufiger die Feinfilter weggelassen und ein Betrieb der nachgeschalteten pneumatischen Einrichtung nur mit dem Grobfilter erfolgt. Ein Betrieb der nachgeschalteten technischen Einrichtungen ohne Feinfilter kann zu erhöhtem Verschleiß, einer verminderten Betriebsdauer sowie zu einem Geräteausfall führen. Bei der Anwendung im Zusammenhang mit medizintechnischen Geräten können darüber hinaus gesundheitliche Beeinträchtigungen von Patienten auftreten, die die betreffenden Geräte benutzen.

Aus der US-A-2,979,159 ist bereits eine Vorrichtung mit einem Filter bekannt, der aus einem Grobfilter und einem Feinfilter besteht. Der Grobfilter und der Feinfilter werden von einer gemeinsamen Halterung positioniert. Die Filterhalterung wird von einem Gerätegehäuse gehaltert. Es liegen somit keine separaten Halterungen für den Grobfilter und den Feinfilter vor.

In der JP-A-2000 015029 wird ebenfalls ein Gerätegehäuse beschrieben, in dessen Bereich in einer Strömungsrichtung hintereinander ein Grobfilter und ein Feinfilter angeordnet sind, die von einem Gerätegehäuse positioniert werden. Aufgabe der vorliegenden Erfindung ist es, eine Vorrichtung der einleitend genannten Art derart zu gestalten, daß ein Betrieb ohne Feinfilter erschwert wird.

Diese Aufgabe wird erfindungsgemäß dadurch gelöst, daß die Feinfilterhalterung eine Abstützung für die Grobfilterhalterung aufweist.

Durch die mindestens teilweise Ausbildung der Arretierung der Grobfilterhalterung durch die Feinfilterhalterung kann zwar ein Betrieb der Vorrichtung ohne Feinfilter nicht verhindert werden, es ist aber ohne eingesetzte Feinfilterhalterung nicht möglich, die Grobfilterhalterung dauerhaft im Bereich des Gerätegehäuses zu fixieren. Bei einem versehentlichen Vergessen des Feinfilters ist deshalb damit zu rechnen, daß die Grobfilterhalterung aus dem Gerätegehäuse herausfällt oder herunterklappt und daß einem Benutzer das Versehen somit auffällt. Bei einem vorsätzlichen Betrieb des Gerätes ohne Feinfilter treten die gleichen Effekte auf oder es muß durch Klebebänder oder durch ähnliche Maßnahmen eine separate Fixierung der Grobfilterhalterung vorgenommen werden. Entsprechende Maßnahmen sind jedoch optisch auffällig, so daß mit der Überwachung der Geräte betraute Personen den unzulässigen Betriebszustand sofort erkennen können.

Eine Ausnutzung der Schwerkraft kann dadurch erfolgen, daß die Feinfilterhalterung eine Abstützung für die Grobfilterhalterung aufweist.

Eine kippsichere Haltung wird dadurch ermöglicht, daß die Feinfilterhalterung eine Auflagefläche für die Grobfilterhalterung bereitstellt.

Zu einer sicheren Fixierung der Grobfilterhalterung in einem vorgesehenen Betriebszustand trägt es bei, daß im wesentlichen gegenüberliegend zur Abstützung ein Rastelement zur Fixierung der Grobfilterhalterung im Bereich des Gerätegehäuses angeordnet ist.

Eine einfache manuelle Handhabbarkeit wird dadurch unterstützt, daß das Rastelement mindestens bereichsweise federnd verformbar ausgebildet ist.

Eine konstruktive Optimierung unter Berücksichtigung der Schwerkraft erfolgt ebenfalls dadurch, daß die Abstützung in lotrechter Richtung unterhalb und mit einem Abstand zum Rastelement angeordnet ist.

Eine typische Geräteanwendung wird dadurch unterstützt, daß die Grobfilterhalterung im Bereich der Rückseite des Gerätegehäuses angeordnet ist.

Eine gute Zugänglichkeit für einen Filterwechsel wird dadurch erreicht, daß die Feinfilterhalterung mindestens bereichsweise eine Schwenkhalterung für die Grobfilterhalterung ausbildet.

Eine bevorzugte Anwendung besteht darin, daß das Gerätegehäuse als Teil eines Beatmungsgerätes ausgebildet ist.

Eine hohe Funktionalität bei gleichzeitig hoher mechanischer Stabilität wird dadurch erreicht, daß die Grobfilterhalterung klappenartig ausgebildet ist und Ausnehmungen sowie mindestens einen Einfassungssteg für den Grobfilter aufweist.

Eine gute Filterwirkung bei zugleich zuverlässigem Schutz der Filter gegenüber mechanischer Beeinträchtigungen wird dadurch erreicht, daß der Grobfilter im Bereich der dem Feinfilter zugewandten Ausdehnung der Grobfilterhalterung angeordnet ist.

Eine hohe Filterwirkung bei gleichzeitig geringem Strömungswiderstand wird dadurch unterstützt, daß der Feinfilter als Faltfilter ausgebildet ist.

In den Zeichnungen sind Ausführungsbeispiele der Erfindung schematisch dargestellt. Es zeigen:
- Fig. 1: eine perspektivische Darstellung eines Beatmungsgerätes mit verbindungsschlauch zu einer Beatmungsmaske,
- Fig. 2: eine rückwärtige Ansicht des in Fig. 1 dargestellten Gerätegehäuses,
- Fig. 3: das Gerätegehäuse gemäß Fig. 2 nach einem Herunterklappen der Grobfilterhalterung,
- Fig. 4: das Gerätegehäuse gemäß Fig. 3 nach einem Abnehmen der Grobfilterhalterung und einem teilweisen Herausnehmen der Feinfilterhalterung und
- Fig. 5: einen teilweisen Querschnitt durch das Gerätegehäuse mit eingesetzter Feinfilterhalterung sowie eingesetzter Grobfilterhalterung.

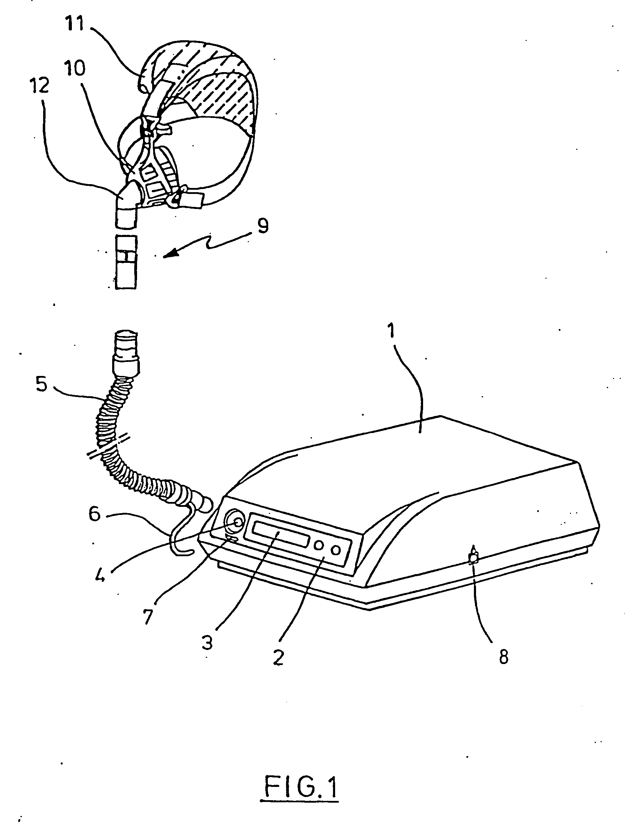

Fig. 1 zeigt den grundsätzlichen Aufbau einer Vorrichtung zur Beatmung. Im Bereich eines Gerätegehäuses (1) mit Bedienfeld (2) sowie Anzeige (3) ist in einem Geräteinnenraum eine Atemgaspumpe angeordnet. Über eine Kopplung (4) wird ein verbindungsschlauch (5) angeschlossen. Entlang des Verbindungsschlauches (5) kann ein zusätzlicher Druckmeßschlauch (6) verlaufen, der über einen Druckeingangsstutzen (7) mit dem Gerätegehäuse (1) verbindbar ist. Zur Ermöglichung einer Datenübertragung weist das Gerätegehäuse (1) eine Schnittstelle (8) auf.

Im Bereich einer dem Gerätegehäuse (1) abgewandten Ausdehnung des Verbindungsschlauches (5) ist ein Ausatmungselement (9) angeordnet. Ebenfalls kann ein Ausatemventil verwendet werden.

Fig. 1 zeigt darüber hinaus eine Beatmungsmaske (10), die als Nasalmaske ausgebildet ist. Gemäß einer anderen Ausführungsform kann auch eine Vollgesichtsmaske verwendet werden. Eine Fixierung im Bereich eines Kopfes eines Patienten kann über eine Kopfhaube (11) erfolgen. Im Bereich ihrer dem verbindungsschlauch (5) zugewandten Ausdehnung weist die Beatmungsmaske (10) ein Kupplungselement (12) auf.

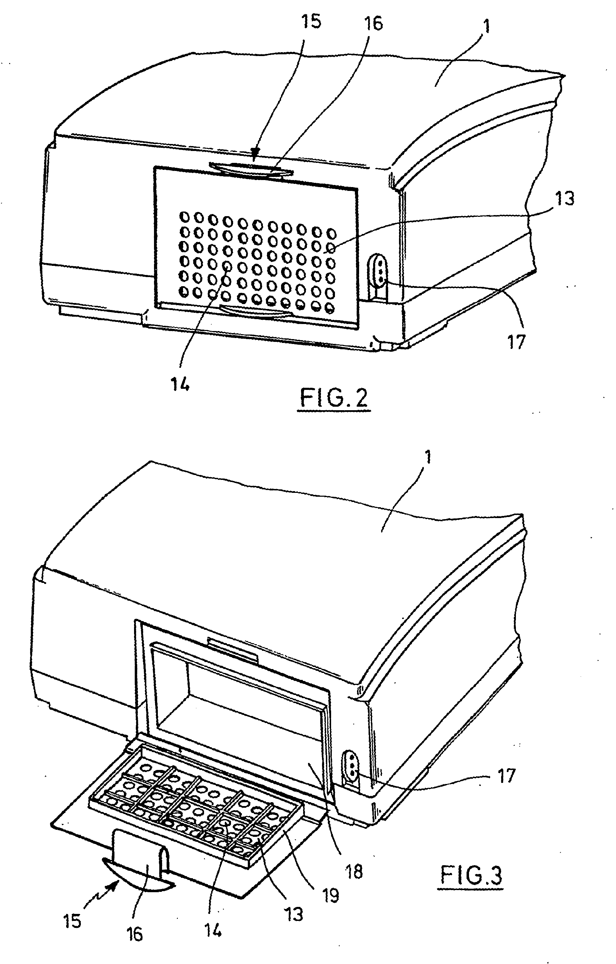

Fig. 2 zeigt eine rückwärtige Ansicht des Gerätegehäuses (1). Zu erkennen ist ein plattenförmiges Teil einer Grobfilterhalterung (13). Das plattenförmige Teil der Grobfilterhalterung (13) ist mit einer Vielzahl von Ausnehmungen (14) versehen. Die Grobfilterhalterung (13) ist über ein Rastelement (15) mit dem Betätigungselement (16) im Bereich des Gerätegehäuses (1) fixiert. In Fig. 2 ist darüber hinaus ein neben der Grobfilterhalterung (13) angeordneter Netzanschluß (17) für eine elektrische Energieversorgung des Gerätes angeordnet.

Fig. 3 zeigt die Anordnung gemäß Fig. 2 nach einem Lösen des Rastelementes (15) und einem Herunterklappen der Grobfilterhalterung (13). Zu erkennen ist hierbei insbesondere eine in das Gerätegehäuse (1) eingesetzte Feinfilterhalterung (18). Zur veranschaulichung der jeweiligen Geometrie der Bauelemente bei der gewählten Darstellung in Fig. 3 im Bereich der Grobfilterhalterung (13) kein Grobfilter und im Bereich der Feinfilterhalterung (18) kein Feinfilter angeordnet. Zur Unterstützung einer Positionierung des Grobfilters weist die Grobfilterhalterung (13) einen innenliegenden Einfassungssteg (19) auf.

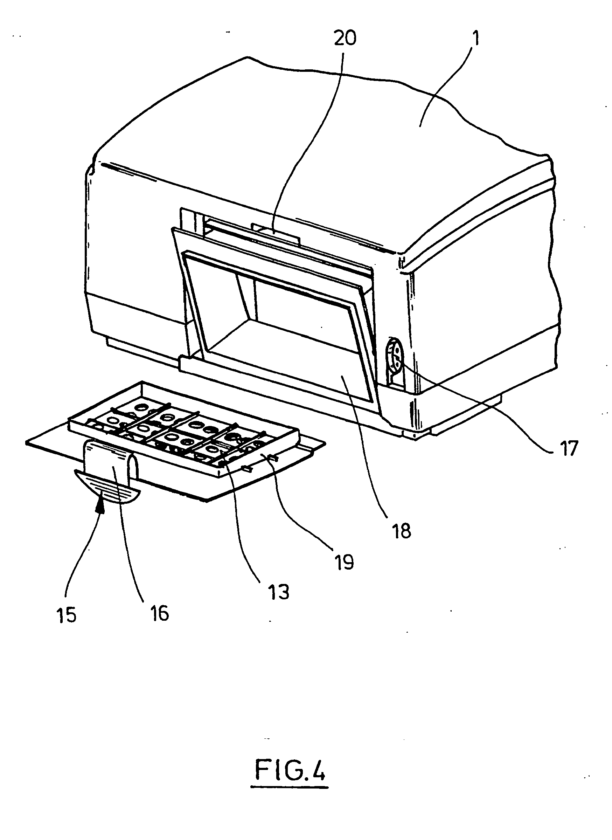

Fig. 4 zeigt die Anordnung gemäß Fig. 3 nach einer vollständigen Trennung der Grobfilterhalterung (13) vom Gerätegehäuse (1) sowie nach einem teilweisen Herausnehmen der Feinfilterhalterung (13) aus dem Gerätegehäuse (1). Es ist zu erkennen, daß die Feinfilterhalterung (18) im wesentlichen rahmenförmig ausgebildet ist. Darüber hinaus ist zu erkennen, daß ein Gegenelement (20) für das Rastelement (15) im Bereich des Gerätegehäuses (1) angeordnet ist.

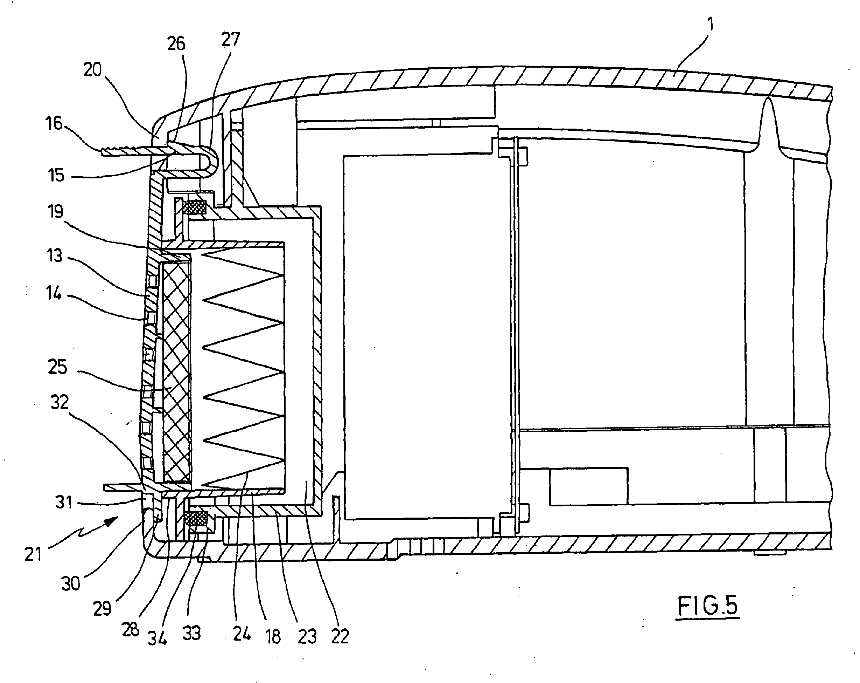

Fig. 5 veranschaulicht einen Querschnitt durch das Gerätegehäuse (1). Es ist zu erkennen, daß die Feinfilterhalterung (18) ausgehend von einer Gehäuseöffnung (21) in eine Filterkammer (22) hineinragt, die von einer Kammerwand (23) begrenzt ist. Im Bereich der Feinfilterhalterung (18) ist ein Feinfilter (24) und im Bereich der Grobfilterhalterung (13) ein Grobfilter (25) angeordnet. Das Rastelement (15) hintergreift mit einer Rastnase (26) einen Bereich des Gegenelementes (20), das als Teil des Gerätegehäuses (1) ausgebildet ist. Bei einer Kraftbeaufschlagung des Betätigungselementes (16) wird eine Umlenkung (27) des Rastelementes (15) federnd zusammengedrückt, so daß die Rastnase (26) das Gegenelement (20) freigibt.

Die Feinfilterhalterung (18) ist mit einer Abstützung (28) für die Grobfilterhalterung (13) versehen. Auf der Abstützung (28) liegt die Grobfilterhalterung (13) mit dem Einfassungssteg (19) auf. Darüber hinaus weist die Grobfilterhalterung (13) einen Arretiersteg (29) auf, der sich bereichsweise zwischen der Feinfilterhalterung (18) und einem Einfassungssteg (30) der Gehäuseöffnung (21) erstreckt.

Wird die Grobfilterhalterung (13) ohne zuvor eingesetzte Feinfilterhalterung (18) mit dem Gerätegehäuse (1) verbunden, so fehlt die vertikale Positionierung der Grobfilterhalterung (13) durch die Abstützung (28) und aufgrund eines in Fig. 5 eingezeichneten Freiraumes (31) zwischen dem Einfassungssteg (30) und einer unteren Begrenzung (32) sackt die Grobfilterhalterung (13) innerhalb der Gehäuseöffnung (21) ab und die Rastnase (26) kann nicht das Gegenelement (20) hintergreifen. Ohne eingesetzte Feinfilterhalterung (18) ist somit eine Arretierung der Grobfilterhalterung (13) im Bereich des Gerätegehäuses (1) nicht möglich.

Die Kammerwand (23) begrenzt ein U-förmiges Halterungsprofil (33) für eine Kammerdichtung (34), gegen die die Feinfilterhalterung (18) abgedichtet geführt ist.

## Patentansprüche

1. Vorrichtung mit einem Filter, der aus einem Grobfilter (25) und einem Feinfilter (24) ausgebildet ist und bei dem der Grobfilter (2) in einer Grobfilterhalterung (13) und der Feinfilter (24) in einer Feinfilterhalterung (18) angeordnet sind, und bei der sowohl die Grobfilterhalterung (13) als auch die Feinfilterhalterung (18) in einem Gerätegehäuse (1) gehaltert und relativ zu diesem positionierbar angeordnet sind sowie bei der die Feinfilterhalterung (18) mindestens einen Teil einer Arretierung der Grobfilterhalterung (13) ausbildet, **dadurch gekennzeichnet, daß** die Feinfilterhalterung (18) eine Abstützung (28) für die Grobfilterhalterung (13) aufweist.

2. Vorrichtung nach Anspruch 1, **dadurch gekennzeichnet, daß** die Feinfilterhalterung (18) eine Auflagefläche für die Grobfilterhalterung (13) bereitstellt.

3. Vorrichtung nach einem der Ansprüche 1 oder 2, **dadurch gekennzeichnet, daß** im wesentlichen gegenüberliegend zur Abstützung (28) ein Rastelement (15) zur Fixierung der Grobfilterhalterung (13) im Bereich des Gerätegehäuses (1) angeordnet ist.

4. Vorrichtung nach Anspruch 3, **dadurch gekennzeichnet, daß** das Rastelement (15) mindestens bereichsweise federnd verformbar ausgebildet ist.

5. Vorrichtung nach einem der Ansprüche 1 bis 4, **dadurch gekennzeichnet, daß** die Abstützung (28) in lotrechter Richtung unterhalb und mit einem Abstand zum Rastelement (15) angeordnet ist.

6. Vorrichtung nach einem der Ansprüche 1 bis 5, **dadurch gekennzeichnet, daß** die Grobfilterhalterung (13) im Bereich der Rückseite des Gerätegehäuses (1) angeordnet ist.

7. Vorrichtung nach einem der Ansprüche 1 bis 6, **dadurch gekennzeichnet, daß** die Feinfilterhalterung (18) mindestens bereichsweise eine Schwenkhalterung für die Grobfilterhalterung (13) ausbildet.

8. Vorrichtung nach einem der Ansprüche 1 bis 7, **dadurch gekennzeichnet, daß** das Gerätegehäuse (1) als Teil eines Beatmungsgerätes ausgebildet ist.

9. Vorrichtung nach einem der Ansprüche 1 bis 8, **dadurch gekennzeichnet, daß** die Grobfilterhalterung (13) klappenartig ausgebildet ist und Ausnehmungen (14) sowie mindestens einen Einfassungssteg (19) für den Grobfilter (25) aufweist.

10. Vorrichtung nach einem der Ansprüche 1 bis 9, **dadurch gekennzeichnet, daß** der Grobfilter (25) im Bereich der dem Feinfilter (24) zugewandten Ausdehnung der Grobfilterhalterung (13) angeordnet ist.

11. Vorrichtung nach einem der Ansprüche 1 bis 10, **dadurch gekennzeichnet, daß** der Feinfilter (24) als Faltfilter ausgebildet ist.

## Claims

1. Apparatus having a filter which is formed from a coarse filter (25) and a fine filter (24) and in which the coarse filter (25) is arranged in a coarse filter mounting (13) and the fine filter (24) is arranged in a fine filter mounting (18), and in which both the coarse filter mounting (13) and the fine filter mounting (18) are mounted in an appliance housing (1) and are arranged so as to be capable of being positioned relative to said housing, and also in which the fine filter mounting (18) forms at least part of a locking mechanism for the coarse filter mounting (13), **characterised in that** the fine filter mounting (18) has a support (28) for the coarse filter mounting (13).

2. Apparatus according to claim 1, **characterised in that** the fine filter mounting (18) provides a supporting surface for the coarse filter mounting (13).

3. Apparatus according to either of claims 1 or 2, **characterised in that** a latching element (15) for fixing the coarse filter mounting (13) in position in the region of the appliance housing (1) is arranged substantially opposite the support (28).

4. Apparatus according to claim 3, **characterised in that** the latching element (15) is designed so as to be resiliently deformable, at least in certain regions.

5. Apparatus according to one of claims 1 to 4, **characterised in that** the support (28) is arranged below, and at a distance from, the latching element (15) in the vertical direction.

6. Apparatus according to one of claims 1 to 5, **characterised in that** the coarse filter mounting (13) is arranged in the region of the rear side of the appliance housing (1).

7. Apparatus according to one of claims 1 to 6, **characterised in that** the fine filter mounting (18) forms, at least in certain regions, a swivel mounting for the coarse filter mounting (13).

8. Apparatus according to one of claims 1 to 7, **characterised in that** the appliance housing (1) is designed as part of a respirator.

9. Apparatus according to one of claims 1 to 8, **characterised in that** the coarse filter mounting (13) is of flap-like design and has clearances (14) and at least one enclosing web (19) for the coarse filter (25).

10. Apparatus according to one of claims 1 to 9, **characterised in that** the coarse filter (25) is arranged in the region of that extension of the coarse filter mounting (13) which faces towards the fine filter (24).

11. Apparatus according to one of claims 1 to 10, **characterised in that** the fine filter (24) is designed as a folded filter.

## Revendications

1. Dispositif avec un filtre, qui est composé d'un filtre grossier (25) et d'un filtre fin (24), et dans lequel le filtre grossier (25) est agencé dans un système de fixation pour filtre grossier (13) et le filtre fin (24) est agencé dans un système de fixation pour filtre fin (18), et dans lequel le système de fixation pour filtre grossier (13) de même que le système de fixation pour filtre fin (18), sont maintenus dans un carter d'appareil (1) et peuvent être positionnés par rapport à celui-ci, ainsi que dans lequel le système de fixation pour filtre fin (18) forme au moins une partie d'un système de blocage de la fixation pour filtre grossier (13), **caractérisé en ce que** le système de fixation pour filtre fin (18) présente un support (28) pour le système de fixation pour filtre grossier (13).

2. Dispositif selon la revendication 1, **caractérisé en ce que** le système de fixation pour filtre fin (18) présente une surface d'appui pour le système de fixation pour filtre grossier (13).

3. Dispositif selon revendication 1 ou 2, **caractérisé en ce qu'**un élément d'accrochage (15) est disposé sensiblement à l'opposé du support (28) pour fixer le système de fixation pour filtre grossier (13) dans la région du carter d'appareil (1).

4. Dispositif selon la revendication 3, **caractérisé en ce que** l'élément d'accrochage (15) est de conception déformable élastiquement, au moins par sections.

5. Dispositif selon l'une des revendications 1 à 4, **caractérisé en ce que** le support (28) est disposé perpendiculairement, au-dessous et à distance de l'élément d'accrochage (15).

6. Dispositif selon l'une des revendications 1 à 5, **caractérisé en ce que** le système de fixation pour filtre grossier (13) est disposé dans la région du dos du carter d'appareil (1).

7. Dispositif selon l'une des revendications 1 à 6 **caractérisé en ce que** le système de fixation pour filtre fin (18) forme, au moins par sections, une attache pivotante pour le système de fixation pour filtre grossier (13).

8. Dispositif selon l'une des revendications 1 à 7, **caractérisé en ce que** le carter d'appareil (1) est conçu en tant que composant d'un respirateur.

9. Dispositif selon l'une des revendications 1 à 8, **caractérisé en ce que** le système de fixation pour filtre grossier (13) est réalisé en forme d'abattant et présente des évidements (14) ainsi qu'au moins une patte d'encadrement (19) pour le filtre grossier (25).

10. Dispositif selon l'une des revendications 1 à 9, **caractérisé en ce que** le filtre grossier (25) est disposé dans la région de l'étendue du système de fixation pour filtre grossier (13), qui est orientée vers le filtre fin (24).

11. Dispositif selon l'une des revendications 1 à 10, **caractérisé en ce que** le filtre fin (24) est réalisé en tant que filtre à plis.
